# EUROPÄISCHE PATENTANMELDUNG

(11) **EP 0 895 837 A2**
(43) Veröffentlichungstag der Anmeldung: **10.02.1999**
(21) Anmeldenummer: 98110057.1
(22) Anmeldetag: 03.06.1998
(51) Int. Cl.: B26D 3/16

(54) **Verfahren und Vorrichtung zum Schneiden eines Rohres**

(30) Priorität: 06.08.1997 DE 19733944
(71) Anmelder: CONVERGENZA AG, FL-9490 Vaduz (LI)
(72) Erfinder: Stevens, Klaus, 52159 Roetgen (DE); Tiedtke, Hans Jürgen, 52249 Eschweiler (DE); Lussem, Horst, 52351 Düren (DE)
(74) Vertreter: Vetter, Ewald Otto, Dipl.-Ing.

(57) **Zusammenfassung**

Vorrichtung zur Bearbeitung eines nicht-rotierenden rohrförmigen Werkstückes in Umfangsrichtung, mit folgenden Merkmalen: zwei axial zueinander angeordnete drehbare Massen (4, 6); Motormittel (38) zum Antreiben der beiden Massen (4, 6) mit gleicher Drehzahl; Bremsmittel (38) zum Abbremsen einer (4) der beiden Massen (4, 6) auf eine niedrigere Drehzahl als die Drehzahl der jetzt nicht mehr angetriebenen, ungebremst infolge ihrer Massenträgheit weiter rotierenden anderen Masse (6); ein Werkzeugmittel (24, 26), welches von einer (4) der beiden Massen (4, 6) getragen wird; eine Mitnehmervorrichtung (16, 18, 20), welche die Drehbewegungsdifferenz der beiden Massen (4, 6) auf das Werkzeugmittel (24, 26) überträgt und dadurch dieses Werkzeugmittel (24, 26) längs eines Werkzeugpositionierweges quer zur Rotationsachse (8) zum Werkstück (2) bewegt, wobei das Werkzeugmittel (24, 26) gleichzeitig eine Querbewegung in Richtung zum Werkzeug hin und eine Umfangsbewegung um das Werkstück (2) macht.

## Beschreibung

Die Erfindung betrifft ein Verfahren und eine Vorrichtung zur Bearbeitung eines rohrförmigen Gegenstandes in Umfangsrichtung gemäß dem Oberbegriff von Anspruch 1 und dem Oberbegriff von Anspruch 4.

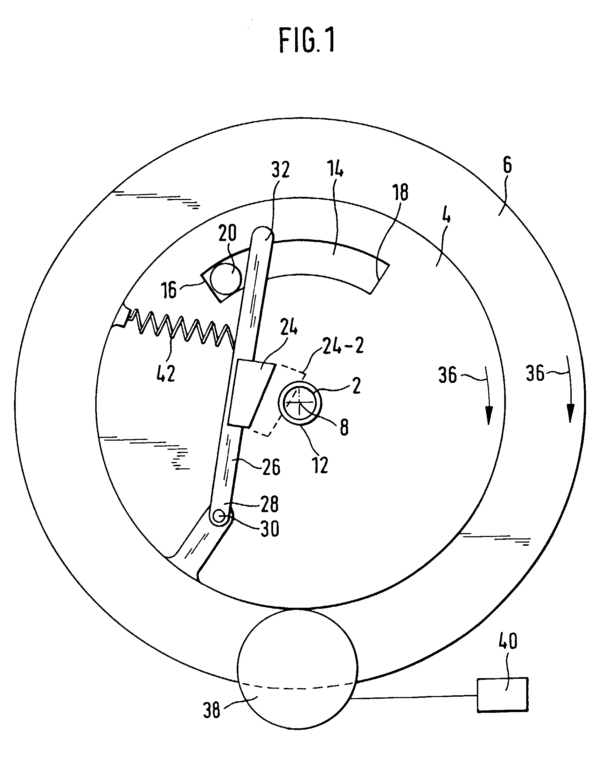

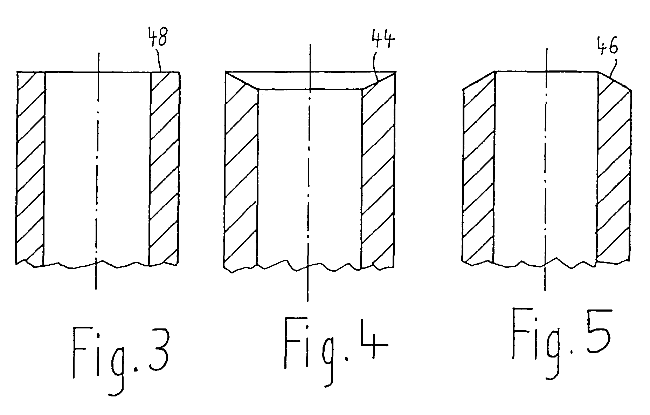

Das FR-Patent 1 439 017 zeigt eine Schneidvorrichtung mit einer angetriebenen Rotorscheibe 21 und einem darauf befestigten Ring 25. Wenn der Rotor angetrieben wird, gelangt ein Schneidwerkzeug 23, welches von einem Werkzeugträger 24 getragen wird und durch Ausschnitte im Rotor und Ring ragt, durch Zentrifugalkraft in eine radial äußere Position. Dabei gleitet ein am Werkzeugträger 24 befestigter Stift 26 in einer Nut 27 im Ring 25 (siehe Fig. 1). Wird der Ring 25 abgebremst, gleitet der Stift 26 in der Nut 27 in eine zweite Position (siehe Fig. 3), welche näher zur Rotationsachse des Rotors 21 liegt, wodurch das Schneidwerkzeug in Schnittposition gelangt. Ein Zeitrelais steuert die Bremse und lockert sie wieder, wenn der Schnitt beendet ist, wodurch das Werkzeug wieder in seine erste Position zurückgebracht wird.

Eine Schlauch-Schneidvorrichtung ist aus dem DD-Patent 115 060 bekannt. Zwei Messer sind in einer Querebene des Schlauches relativ zu einer Rotationsachse einander diametral gegenüberliegend angeordnet. 90° versetzt zu den Messern sind Gewichte angeordnet, welche über zweiarmige Hebel auf die Messer wirken. Bei Drehung einer Scheibe, welche die Messer und die Gewichte trägt, werden die Gewichte aufgrund der Zentrifugalkraft entgegen der Kraft von Federn nach außen bewegt. Hierbei bewegen die Gewichte über die zweiarmigen Hebel die Messer von außen nach innen zu dem zu schneidenden Schlauch.

Das DE-Gebrauchsmuster 19 83 281 zeigt eine Schlauch-Schneidvorrichtung mit einem Gehäuse, welches um eine Rotationsachse drehbar ist und eine axiale Durchgangsöffnung für den zu schneidenden Schlauch hat. Ein radial im Gehäuse geführter Kolben wird von einer Druckfeder radial nach innen in Richtung zu dem zu schneidenden Schlauch gedrängt, so daß ein Messer am radial inneren Kolbenende in den Schlauch eingreift. Bei Drehung des Gehäuses wird der Kolben durch die Fliehkraft entgegen der Kraft der Druckfeder radial nach außen aus dem Bereich des Schlauches herausgetrieben. Dies hat den Nachteil, daß der Schlauch nur bei rotierendem Gehäuse axial in eine dem Messer gegenüberliegende Position gebracht werden kann. Die radiale Kraft des Messers auf den Schlauch ist im wesentlichen von der Federkraft der Druckfeder abhängig und kann durch die Fliehkraft nur wenig und ungenau beeinflußt werden. Dieser Nachteil wird noch dadurch verstärkt, daß das Gewicht der Messer-Kolben-Einheit nur verhältnismäßig klein gemacht werden kann, außer das Gehäuse und die Vorrichtung insgesamt werden nachteilig groß und schwer ausgebildet.

Die DE-A-29 50 785 zeigt eine Schlauch-Schneidvorrichtung für sehr dünne Schläuche, welche auf einen Dorn aufgezogen werden müssen, damit sie beim Schneiden nicht kollabieren. Eine den Schlauch umgebende Ringscheibe ist von einem Motor um eine Rotationsachse antreibbar und hat eine zur Rotationsachse parallele Drehachse, an welcher ein doppelarmiger Hebel schwenkbar gelagert ist, an dessen einem Hebelarm eine Messerschneide und an dessen anderem Hebelarm eine Zugfeder befestigt ist. Durch die Fliehkraft bei der Rotation der Ringscheibe wird das Messer unter Überwindung der Spannkraft des Federelements in Schnittposition gebracht. Es ist kein definierter Massenschwerpunkt des doppelarmigen Hebels erkennbar, so daß nicht erkennbar ist, ob die Messerschneide von der Fliehkraft radial von außen nach innen zum Schlauch oder umgekehrt bewegt wird.

Die US-A-5 528 830 zeigt eine Schlauch-Schneidvorrichtung,
bei welcher an einem rotierenden Grundkörper um Schwenkachsen schwenkbar befestigte Träger von Schneidköpfen durch Zentrifugalkraft um die Schwenkachsen kippen und dadurch die Schneidköpfe in Schneidkontakt mit einem zentral angeordneten Schlauch bringen.

Ein besonderes Anwendungsgebiet der Erfindung ist das Schneiden und/oder das Behandeln der Oberflächen von Schnittstellen von Schläuchen, die abgeschnitten werden, um daraus Schlauchstücke zu bilden, die in menschliche oder tierische Patienten eingeführt werden, insbesondere als Katheter oder als Teil eines Katheters. Schläuche dieser Art müssen konträre Bedingungen erfüllen: sie müssen flexibel sein, damit sie gut und leicht um Ecken und Abzweigungen herum durch Organe und Gefäße eines Patienten gleiten können; sie müssen einen guten 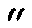 push" haben, daß heißt sie dürfen nicht seitlich ausknicken, wenn sie in Organe oder Gefäße eines Patienten eingeschoben werden; sie müssen einen guten 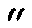 torque" haben, daß heißt sie müssen zur Übertragung von Drehmomenten drehsteif sein. Die Schläuche haben einen Außendurchmesser in der Regel zwischen ungefähr 1 mm und 20 mm, und eine dünne Schlauchwand, normalerweise aus Kunststoffmaterial. Die Schlauchwand kann eine Verstärkung aus Natur- oder Kunststofffäden oder Edelstahldraht, beispielsweise in Form eines Netzes (braided tubes) enthalten. Beim Abschneiden der Schläuche mit bekannten Methoden stehen oft die Enden der Fäden oder Drähte aus dem Kunststoffmaterial der Schlauchwand heraus und müssen zusätzlich bearbeitet, beispielsweise zusätzlich abgeschnitten werden oder durch eine Hülle abgedeckt werden und/oder es muß das Kunststoffmaterial über die Faden- oder Drahtenden gezogen werden. Beim Abschneiden eines Schlauches durch eine Schere oder ein 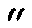 Fallbeil" werden die Drahtenden gequetscht, so daß sie scharfe Spitzen bekommen, die beim Einführen des Schlauches in einen Patienten zu Schäden führen würden; ferner wird das Schlauchende 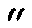 ohren-förmig" verformt, daß heißt es ist keine saubere gerade Schnittfläche herstellbar.

Durch die Erfindung soll die Aufgabe gelöst werden, rohrförmige Gegenstände derart abzuschneiden, daß die Schnittkanten sauber und scharf sind, insbesondere auch dann, wenn die Wand des rohrförmigen Gegenstandes flexibel und dünn ist und Verstärkungselemente enthält, z.B. Natur- oder Kunststofffäden oder Drähte. Die Aufgabe soll derart gelöst werden, daß in kurzer Zeit viele Stücke von rohrförmigen Gegenständen abgeschnitten werden können. Der Schnitt soll rechtwinklig oder schräg zur Mittelachse des rohrförmigen Gegenstandes verlaufen.

Unter dem hier verwendeten Begriff 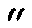 rohrförmiger Gegenstand" ist jedes steife Rohr bis hin zum extrem flexiblen dünnwandigen Schlauch zu verstehen.

Die Aufgabe wird gemäß der Erfindung durch Anspruch 1 und durch Anspruch 4 gelöst.

Weitere Merkmale der Erfindung sind in den Unteransprüchen enthalten.

Die Erfindung wird im folgenden mit Bezug auf die Zeichnungen anhand einer bevorzugten Ausführungsform als Beispiel beschrieben. In den Zeichnungen zeigen
- Fig. 1: eine Frontansicht der Vorrichtung nach der Erfindung zur Bearbeitung von rohrförmigen Gegenständen in Umfangsrichtung, inbesondere zum Abschneiden von Längsstücken von solchen rohrförmigen Gegenständen,
- Fig. 2: eine Seitenansicht, teilweise im Axialschnitt, der Vorrichtung von Fig. 1,
- Fig. 3: ein radial abgeschnittenes Schlauchende im Axialschnitt,
- Fig. 4: ein schräg nach innen abgeschnittenes Schlauchende im Axialschnitt, und
- Fig. 5: ein schräg nach außen abgeschnittenes Schlauchende im Axialschnitt.

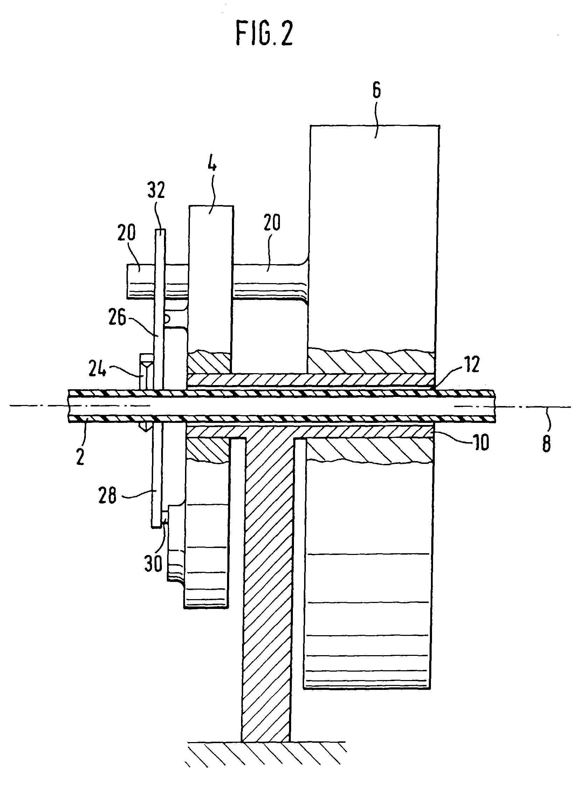

Die Fig. 1 und 2 zeigen einen rohrförmigen Gegenstand 2, im folgenden Werkstück genannt, der ein steifes Rohr oder vorzugsweise ein flexibler, verstärkter Schlauch (braided tube) ist, von welchem Längeneinheiten abgeschnitten und als Katheter oder Katheterschlauch zum Einführen in Patienten verwendet werden. Die Vorrichtung zur Bearbeitung dieses Werkstückes 2 enthält zwei mit kurzem Abstand axial hintereinander angeordnete drehbare Massen in Form eines scheibenförmigen Rotationskörpers 4 und eines Schwungrades 6. Der Rotationskörper 4 und das Schwungrad 6 sind je um eine gemeinsame Rotationsachse 8 drehbar auf einer Lagervorrichtung 10 angeordnet. Das rohrförmige Werkstück 2 erstreckt sich mit radialem Spielraum durch eine Bohrung 12 der Lagervorrichtung 10 axial zur Rotationachse 8 und ist durch nichtrotierende Positioniermittel (nicht dargestellt) radial positioniert.

Im Rotationskörper 4 ist kreisbogenförmig zur Rotationsachse 8, mit radialem Abstand von ihr, ein Schlitz 14 gebildet, welcher radiale Endflächen hat, welche gegeneinander zeigen und als Anschläge 16 und 18 für einen Mitnehmerbolzen 20 verwendet werden. Der Mitnehmerbolzen 20 ist am Schwungrad 6 befestigt und erstreckt sich parallel zur Rotationsachse 8 in den Schlitz 14 zwischen den Anschlägen 16 und 18. Dadurch kann das Schwungrad 6 relativ zum Rotationskörper 4 um eine Winkelstrecke vor- und zurückgedreht werden, die der Winkelstrecke entspricht, welche der Mitnehmerbolzen 20 zwischen den Anschlägen 16 und 18 sich bewegen kann. Diese Winkelstrecke ist so groß, daß der Mitnehmerbolzen 20 ein Werkzeug 24 von der in Fig. 1 in ausgezogenen Linien dargestellten Ausgangsposition, in welcher es vom Werkstück 2 radial entfernt ist, in die in Fig. 1 in gestrichelten Linien dargestellte Arbeits-Position 24-2 quer zur Rotationsachse 8 radial oder leicht bogenförmig bewegen kann, in welcher das Werkzeug in Eingriff mit dem Werkstück 2 ist.

Das Werkzeug 24, vorzugsweise eine Schneidklinge, ist an einem als Hebel ausgebildeten Werkzeugträger 26 so befestigt, daß seine Arbeitsseite der Rotationsachse 8 und dem Werkstück 2 zugewandt ist. Das eine Hebelende 28 des Werkzeugträgers 26 ist durch ein Schwenklager 30, welches eine zur Rotationsachse 8 parallele Schwenkachse hat, schwenkbar am Rotationskörper 4 befestigt, an einer Stelle, welche auf der anderen Seite von der Rotationsachse 8 als der Schlitz 14 liegt, ungefähr diametral gegenüberliegend. Das nichtgelagerte freie Hebelende 32 liegt an der Seite des Mitnehmerzapfens 20 an, welche in Drehrichtung 36 des Rotationskörpers 4 zeigt.

Der Rotationskörper 4 kann von einem schematisch dargestellten Motor 38 in Drehrichtung 36 angetrieben werden. Der Motor 38 kann von jeder beliebigen Art sein, insbesondere ein Elektromotor, Luft-Turbinen-Motor, Hydraulikmotor oder dergleichen. Die Drehzahl des Motors 38 wird von einer Steuer- oder Regeleinrichtung 40 in Abhängigkeit von der gewünschten Zustellgeschwindigkeit des Werkzeuges 24 relativ zum stillstehenden Werkstück 2 und/oder in Abhängigkeit von dem gewünschten radialen Anpreßdruck des Werkzeuges 24 am Werkstück 2 gesteuert oder geregelt werden. Der Motor 38 kann durch die Steuer- oder Regeleinrichtung 40 auch derart angesteuert werden, daß er als Bremse zum Abbremsen des rotierenden Rotationskörpers 4 wirkt, anstatt eine separate Bremse zu benutzen.

Fig. 1 zeigt die Ausgangsposition, bei welcher der Rotationskörper 4, das Schwungrad 6 und der Motor 38 nicht rotieren. Eine Zugfeder 42 ist mit ihrem einen Ende an einer vom Schwenklager 30 möglichst weit entfernten Stelle am hebelartigen Werkzeugträger 26 befestigt, während ihr anderes, von der Rotationsachse 8 weiter entfernt liegendes Ende am Rotationskörper 4 befestigt ist. Anstelle einer solchen Zugfeder 42 könnte auch eine Druckfeder auf der entgegengesetzten Seite des hebelförmigen Werkzeugträgers 26 angeordnet sein. Die Zugfeder 42 zieht in der Ausgangsposition über den Werkzeugträger 26 und den Mitnehmerbolzen 20 das Schwungrad 6 in die in Fig. 1 gezeigte Position, in welcher der Mitnehmerbolzen 20 am Anschlag 16 anliegt, welcher in Antriebs-Drehrichtung 36 des Rotationskörpers 4 zeigt. Das Werkzeug 24 hat radialen Abstand vom Werkstück 2. Erste Betriebssituation: Wenn der Motor 38 eingeschaltet und dadurch der Rotationskörper 4 in Antriebs-Drehrichtung 36 angetrieben wird, wird durch den in dieser Drehrichtung 36 zeigenden Anschlag 16 und den an ihm anliegenden Mitnehmerbolzen 20 auch das Schwungrad 6 mit gleicher Drehzahl in Antriebs-Drehrichtung 36 angetrieben. Die Drehzahl des Rotationskörpers 4 und des Schwungrades 6 in Antriebs-Drehrichtung 36 kann beispielsweise zwischen 30 und 30000 U/min liegen. Zweite Betriebssituation: Wenn jetzt der Rotationskörper 4 vom Motor 38 oder einer besonderen Bremsvorrichtung auf eine ein wenig kleinere Drehzahl, jedoch nicht auf Null, als das Schwungrad 6 abgebremst wird, überholt das Schwungrad 6 aufgrund seiner Massenträgkeit den Rotationskörper 4, wobei der Mitnehmerbolzen 20 den Werkzeugträger 32 mit dem Werkzeug 24 entgegen der Kraft der Zugfeder 42 mit Bezug auf Fig. 1 soweit nach rechts schwenkt, bis der Mitnehmerbolzen 20 an dem entgegengesetzt zur Drehrichtung 36 zeigenden Anschlag 18 anliegt. Dies ist gleichzeitig die Endposition 24-2 des Werkzeuges 24, nachdem es sich durch die Kombination von Rotation um das sich nicht-drehende Werkstück 2 und die gleichzeitige Querbewegung dazu ungefähr radial zur Rotationsachse 8 durch die Wand des Werkstückes 2 hindurchgeschnitten hat. Der Antriebsmotor 38 kann abgeschaltet oder auf Leerlauf geschaltet werden, sobald das Schwungrad 6 den Rotationskörper 4 überholt und dadurch vom hinteren Anschlag 16 zum vorderen Anschlag 18 bewegt wird. Wenn der Anschlagbolzen 20 den vorderen, entgegen der Antriebs-Drehrichtung 36 zeigenden Anschlag 18 erreicht hat, kann der Motor 38 abgeschaltet oder abgekuppelt oder anstelle einer Bremse zum Abbremsen des Rotationskörpers 4 und der Schwungmasse 6 bis zu deren Stillstand verwendet werden. Dritte Betriebssituation: Sobald dann die Bewegungsenergie des Schwungrades 6 eine kleinere Kraft auf den Werkzeugträger 26 ausübt als die Zugfeder 42, zieht die Zugfeder 42 den Werkzeugträger 26 und den Mitnehmerbolzen 20 zusammen mit dem Schwungrad 6 in die in Fig. 1 in ausgezogenen Linien gezeigte Ausgangsposition zurück.

Die Erfindung ist nicht auf die Verwendung von Schneidwerkzeugen 24 beschränkt. Stattdessen können auch andere Werkzeuge verwendet werden, beispielsweise ein Laserstrahlgerät zum Schneiden oder Behandeln der Oberfläche des Werkstückes 2, oder Schleifwerkzeuge oder Polierwerkzeuge zur Oberflächenbehandlung des Werkstückes 2.

Wenn das rohrförmige Werkstück 2 einen größeren Durchmesser als der Rotationskörper 4 und das Schwungrad 6 hat, dann ist auch eine Ausführungsform möglich, bei welcher das Werkzeug 24 radial über den Außenumfang des Rotationskörpers 4 und des Schwungrades 6 hinausragt und von innen nach außen in die Wand des rohrförmigen Werkstückes 2 eingreift, zu welchem Zwecke mindestens das Werkzeug 24 und der Rotationskörper 4 in das rohrförmige Werkstück 2 axial eingesetzt werden müssen.

Gemäß einer nicht dargestellten Ausführungsform kann die Masse des Schwungrades 6 aufgeteilt sein auf mehrere miteinander antriebsmäßig verbundene Rotationselemente. Eine solche Ausführungsform kann aus einem Rad oder einer Scheibe oder einem Hebel, welche(r,s) um die Rotationsachse 8 drehbar angeordnet und mit einem Mitnehmermittel, z.B. dem Mitnehmerzapfen 20, versehen ist, und aus einem separaten Schwungrad bestehen, welches mit dem Rad, der Scheibe oder dem Hebel antriebsmäßig direkt oder über Zwischenelemente, z.B. ein Getriebe, verbunden oder fest oder trennbar gekuppelt ist. Dieses separate Schwungrad kann axial oder achsparallel versetzt zur Rotationsachse 8 angeordnet sein.

Gemäß einer besonderen Ausführungsform ist vorgesehen, daß die Bewegungsrichtung des Werkzeugmittels 24, 26, mindestens im Bereich des Werkstücks 2, relativ zur Rotationsachse 8 unter einem von 90 Grad abweichenden Winkel verläuft, so daß sich am Werkstück 2 eine schräge nach innen abfallende Stirnfläche 44 gemäß Fig. 4 oder eine nach außen abfallende Stirnfläche 46 gemäß Fig. 5 ergibt.

Dies kann erreicht werden durch Positionieren der Drehachse des Schwenklagers 30 schräg zur Rotationachse 8. Dadurch hat die stirnseitige Schnittfläche des Schlauches einen größeren Querschnitt als eine radiale Schnittfläche 48 von Fig. 3 und ist leichter und dauerhafter an anderen Teilen, insbesondere einem Katheter-Teil in der Medizintechnik, befestigbar, z.B. anklebbar oder anschweißbar.

## Patentansprüche

1. Verfahren zur Bearbeitung eines nicht-rotierenden rohrförmigen Werkstückes in Umfangsrichtung, mit folgenden Merkmalen: Antreiben von zwei drehbaren Massen (4, 6) um eine gemeinsame Rotationsachse durch Motormittel (38), so daß sie miteinander rotieren ohne Relativbewegung zwischen ihnen; Abbremsen einer der beiden Massen (4, 6) auf eine ein wenig niedrigere Drehzahl, und ungebremstes Weiterlaufenlassen der anderen Masse, ohne sie anzutreiben, so daß diese andere Masse infolge ihrer Massenträgheit ebenfalls weiter rotiert, jedoch relativ zur einen Masse sich schneller dreht; Übertragen der daraus resultierenden Drehbewegungsdifferenz der beiden Massen (4, 6) durch eine Mitnehmervorrichtung (20) auf ein Werkzeug (24), welches von einer der beiden Massen (4, 6) getragen wird, wobei das Werkzeug (24) längs eines Werkzeugpositionierweges quer zur Drehachse (8) von außen nach innen in den Bereich des Werkstückes (2) bewegt wird und dabei gleichzeitig eine Umfangsbewegung um das Werkstück macht,
**dadurch gekennzeichnet**, daß der zum Werkstück (2) gerichteten Werkzeugbewegung mit einer Federkraft (42) entgegengewirkt wird, welche das Werkzeug (24) wieder vom Werkstück (2) weg längs des Werkzeugpositionierweges in eine Ausgangslage zurückdrängt, wenn die aus der Drehbewegungsdifferenz erzeugte Kraft auf das Werkzeug (24) kleiner wird als die Federkraft, und daß das Werkzeug (24) um eine zur Rotationsachse (8) exzentrisch angeordnete Schwenkachse (30) bogenförmig längs des Werkzeugpositionierweges bewegt wird.

2. Verfahren nach Anspruch 1,
**dadurch gekennzeichnet**, daß als Werkzeug (24) ein Schneidwerkzeug verwendet wird und von dem Werkstück (2) Längsstücke dadurch abgeschnitten werden, daß das Schneidwerkzeug (24) in Umfangsrichtung und gleichzeitig in Querrichtung durch die Wand des Werkstückes (2) bewegt wird.

3. Verfahren nach Anspruch 1 oder 2,
**dadurch gekennzeichnet**, daß das Werkzeug (24) von der abgebremsten Masse (4) getragen wird.

4. Vorrichtung zur Bearbeitung eines nicht-rotierenden rohrförmigen Werkstückes in Umfangsrichtung,
**gekennzeichnet durch** folgende Merkmale: zwei axial zueinander angeordnete drehbare Massen (4, 6); Motormittel (38) zum Antreiben der beiden Massen (4, 6) mit gleicher Drehzahl; Bremsmittel (38) zum Abbremsen einer (4) der beiden Massen (4, 6) auf eine niedrigere Drehzahl als die Drehzahl der jetzt nicht mehr angetriebenen, ungebremst infolge ihrer Massenträgheit weiter rotierenden anderen Masse (6); ein Werkzeugmittel (24, 26), welches von einer (4) der beiden Massen (4, 6) getragen wird; eine Mitnehmervorrichtung (16, 18, 20), welche die Drehbewegungsdifferenz der beiden Massen (4, 6) auf das Werkzeugmittel (24, 26) überträgt und dadurch dieses Werkzeugmittel (24, 26) längs eines Werkzeugpositionierweges quer zur Rotationsachse (8) zum Werkstück (2) bewegt, wobei das Werkzeugmittel (24, 26) gleichzeitig eine Querbewegung in Richtung zu dem axial in der Rotationsachse (8) angeordneten Werkstück (2) hin und eine Umfangsbewegung um das Werkstück (2) macht; ein Federmittel (42), dessen Federkraft entgegengesetzt zu der Kraft auf das Werkzeugmittel (24, 26) wirkt, welche das Werkzeugmittel quer zur Rotationsachse (8) zum Werkstück (2) bewegt, wobei das Federmittel (42) das Werkzeugmittel (24, 26) vom Werkstück (2) weg in eine Ausgangslage zurückbewegt, wenn die aus der Drehbewegungsdifferenz der beiden Massen (4, 6) erzeugte Kraft auf das Werkzeugmittel (24, 26) kleiner wird als die Federkraft.

5. Vorrichtung nach Anspruch 4,
**dadurch gekennzeichnet**, daß das Werkzeugmittel (24, 26) von der abgebremsten Masse (4) getragen wird.

6. Vorrichtung nach Anspruch 4 oder 5,
**dadurch gekennzeichnet**, daß das Werkzeugmittel (24, 26) um eine Schwenkachse (20) schwenkbar angeordnet ist, die exzentrisch parallel zur Rotationsachse (8) angeordnet ist.

7. Vorrichtung nach einem der Ansprüche 4 bis 6,
**dadurch gekennzeichnet**, daß das Werkzeugmittel (24, 26) ein Schneidwerkzeug (24) aufweist, welches zum Abschneiden eines Längsstückes vom Werkstück (2) gleichzeitig um das Werkstück (2) herum und quer dazu in Richtung zur Rotationsachse (8) hin in das Werkstück (2) hineinbewegt wird.

8. Vorrichtung nach einem der Ansprüche 4 bis 7,
**dadurch gekennzeichnet**, daß die Masse (4), welche das Werkzeugmittel (24, 26) trägt, zwei in Umfangsrichtung um die Rotationsachse (8) mit Abstand voneinander angeordnete Anschläge (16, 18) aufweist, daß die andere Masse (6) mit einem Mitnehmer (20) versehen ist, welcher zwischen die beiden Anschläge (16, 18) ragt und zusammen mit der anderen Masse (6) von Anschlag zu Anschlag bewegbar ist, und daß der Mitnehmer (20) auf seiner in Drehrichtung der anderen Masse (6) zeigenden Seite an einer entgegengesetzten Mitnehmerfläche (26) des Werkzeugmittels (24, 26) anliegt.

9. Vorrichtung nach einem der Ansprüche 4 bis 8,
**gekennzeichnet durch** einen Motor (38), welcher als das genannte Motormittel und das genannte Bremsmittel benutzbar ist.

10. Vorrichtung nach einem der Ansprüche 4 bis 9,
**gekennzeichnet durch** eine elektronische Steuer- oder Regeleinheit (40) zur Steuerung der Drehzahlen der beiden Massen. (4, 6).

11. Vorrichtung nach einem der Ansprüche 4 bis 10,
**dadurch gekennzeichnet**,
daß die Bewegungsrichtung des Werkzeugmittels (24, 26), mindestens im Bereich des Werkstücks (2), relativ zur Rotationsachse (8) unter einem von 90 Grad abweichenden Winkel verläuft, so daß sich am Werkstück (2) eine schräge nach innen oder nach außen abfallende Stirnfläche (44, 46) ergibt.
